Europäisches Patentamt

European Patent Office

Office européen des brevets

(19)

(11) Publication number: **0 207 733**

**A1**

(12) # EUROPEAN PATENT APPLICATION

(21) Application number: 86304949.0

(22) Date of filing: 25.06.86

(51) Int. Cl.⁴: **B62D 63/06** , B60D 1/14

(30) Priority: 25.06.85 NZ 212554

(43) Date of publication of application:
07.01.87 Bulletin 87/02

(84) Designated Contracting States:
AT BE DE FR GB IT NL SE

(71) Applicant: **Liteweight Caravans Limited**
**Riverlea Road**
**Hamilton(NZ)**

(72) Inventor: **Jessen, Eric Rushlee**
**118 Hillcrest Road**
**Hamilton(NZ)**

(74) Representative: **White, Martin David et al**
**MARKS & CLERK 57/60 Lincoln's Inn Fields**
**London WC2A 3LS(GB)**

(54) **Improvements to trailers.**

(57) Loaded boat trailers and caravans transfer a downward force upon the towing hitch of the towing vehicle. This spoils the rear suspension of the vehicle and reduces traction in a front wheel drive towing vehicle.

A trailer (42) is disclosed in which a castor mounted road wheel (20) is located forwardly of the trailer's road wheels (44) at the front of the trailer and a towbar (32) is pivoted to the front of the trailer allowing the trailer to run as a three wheel vehicle independent of the suspension of the towing vehicle 46.

A friction damper (26) for the castor wheel is disclosed and a raised section (28) for the wheel mounting enables the castor wheel to be turned through 360° when the trailer is unhitched.

Fig.3.

EP 0 207 733 A1

Xerox Copy Centre

## IMPROVEMENTS TO TRAILERS

This invention concerns trailers, especially caravans and light trailers of the type used in tow boats.

It is usual to locate the wheels of a trailer at or close to the centre transverse axis and in the case of a caravan to provide a jockey wheel on the towbar which can be wound into contact with the ground to provide stability and manoeuverability when the caravan is detached from the towing vehicle. The location of the wheels at the centre axis introduces problems. Firstly the trailer is subject to snaking which causes both trailer and towing vehicle to weave instead of travelling true. Secondly the trailer must overhang the wheels which adds to the drivers' difficulty in driving around bends. In turn the overhang in effect reduces ground clearance which means the driver may bottom the trailer when travelling over undulating ground. Thirdly, when trailers have one pair of wheels, some of the trailer load must inevitably be supported by the towing vehicle because of the leverage exerted by the trailer towbar. The downward force imposed on the draw bar can vary from 50 to 250 kg depending upon the mass distribution of the trailer. This force tends to press down the rear of the towing vehicle which causes both loss of traction in the case of a front wheel drive vehicle and reduction in the remaining suspension travel in the rear wheels.

Even the provision of two pairs of wheels for example in a caravan may still result in a resultant downward force on the draw bar because of the non-symmetrical loading of the caravan interior. The invention is therefore applicable to trailers with more than one pair of wheels.

US 3 785 680 proposes that snaking be reduced by the provision of a friction disc damper fixed by a bracket to the trailer towbar and a pivot arm connected between the towing hitch and the friction damper. This device reduces snaking but leaves the problems of overhang and bottoming untouched. UK 1 595 475 proposes a jockey wheel mounted on the towbar in a vertical axis mount which gives a castor action restrained by a friction damper. The damper is intended to permit sufficient side by side movement of the jockey wheel to reduce tyre wear to an acceptable rate.

The disadvantages of such a proposal are that as no structural provision is made for accomodating a wheel of the same order of size as the trailer wheel, the jockey wheel must fit below the towbar. Consequently the distance available for the provision of a supension linkage is correspondingly small and no use for proportion of the trailers' weight can be transferred to the jockey wheel.

Thus the wheels of the trailer cannot be moved rearwardly to reduce overhang and ground clearance must remain high in order to prevent bottoming.

This invention addresses these remaining problems.

This invention provides a road going vehicle trailer having a pair of road wheels, a castor mounted road wheel assembly located forwardly of the road wheels towards the front of the trailer and a towbar extending forwardly of the castor mounted wheel assembly characterised in that one of the towbar is pivoted to the front of the trailer and the opposite end has a hitch for connection to the towing vehicle.

The trailer may be a caravan, boat trailer or the like. The castor wheel may be mounted on a chassis of the trailer in which instance it is more likely that the castor wheel will be smaller than the road wheel because it must fit beneath the chassis or have a central section of the chassis modified to receive the castor wheel. It is simpler to mount the castor wheel forwardly of the main chassis members or in the case of the caravan, forwardly of the body of the caravan for example upon an arm extending forwardly of the trailer body but it is both convenient and practical to mount it on the towbar itself. For this purpose the towbar may be modified by fabricating the same to give a cranked appearance in elevation thereby providing a section which has sufficient ground clearance to permit a castor arm and a wheel of the same order of diameter as the trailer wheels, to be accommodated.

In practice we have found the slope of cranked section is important to the operation of the castor wheel and prefer to utilise a forwardly inclined angle of 72 1/2 degrees to the horizontal. Additionally we prefer to incline the castor arm at 75 degrees to the horizontal.

the handling of the trailer is improved if the castor wheel is sprung. The tendency of the castor wheel to oscillate is reducible by the use of a damper, conveniently a friction damper, in the castor wheel mount.

One embodiment of the invention is now described by way of example with reference to the accompanying drawings, in which:

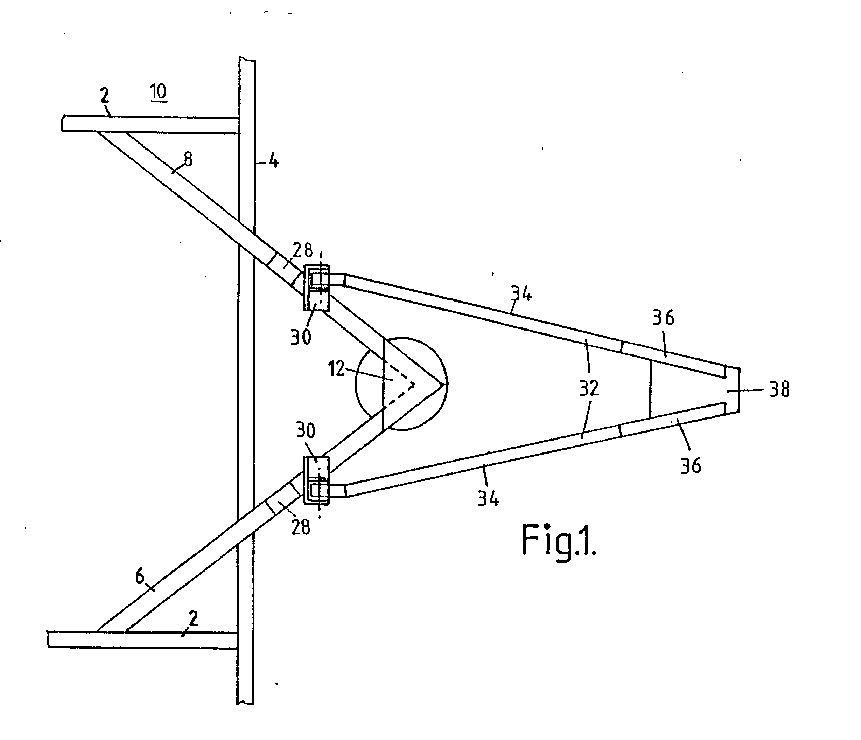

Figure 1 is a plan of a boat trailer.

Figure 2 is an enlarged side elevation of the forward portion of the trailer.

Figure 3 is a diagrammatic side view of a vehicle and caravan.

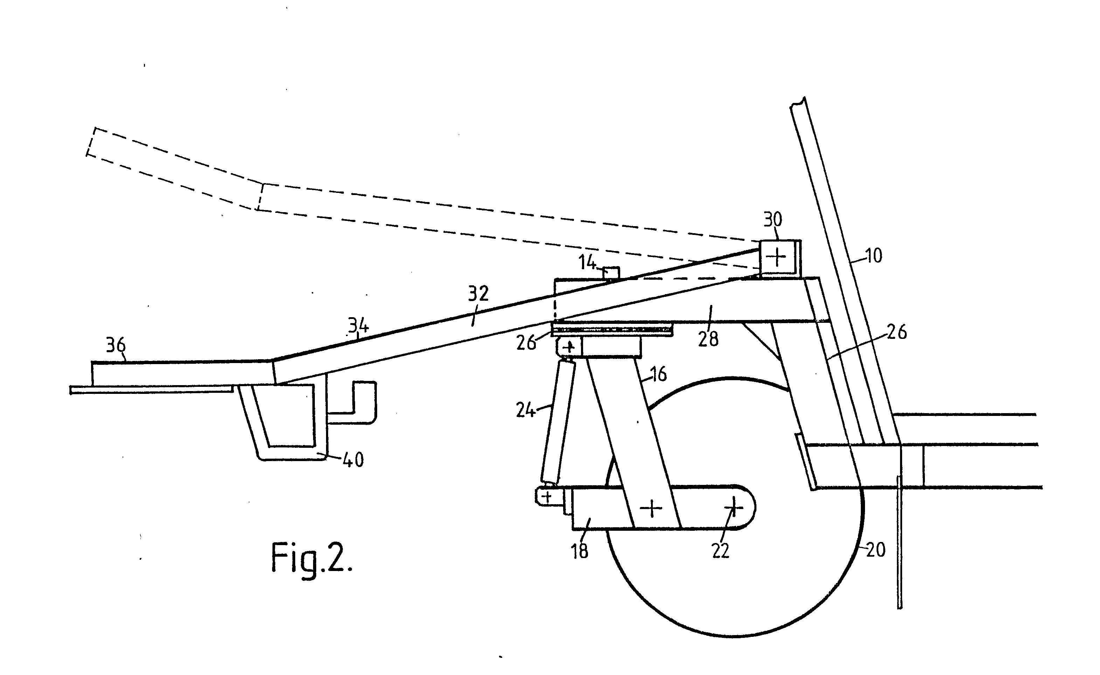

Referring now to the drawings, the chassis of the boat trailer comprises a pair of longitudinal beams 2 joined by a front bearer 4. Attached to beams 2 is a wheel section which comprises a pair of converging arms 6, 8 which meet in advance of the body 10 and are braced by a gusset 12. The gusset is bored to receive a mount pin 14 of a raked drop arm 16 which is inclined at 70° to 80° to the horizontal and which supports a horizontal trailing arm 18. A castor wheel 20 runs on an axle 22 which is supported on the trailing arm. A single arm renders wheel changing easier. A coil spring and shock absorber assembly 24 act between the trailing arm 18 and the top of the drop arm. An adjustable friction disc damper 26 is imprisoned and acts between the gusset and a mounting flange at the top of the drop arm. The wheel section is cranked at an angle of from 62° to 82°. The castor wheel is sufficiently separated for it to be free to run through 360 degrees, but most of the time it need only turn through the arc lying between the converging arms 6, 8. In order to obtain the correct height for the wheel mount the arms 6, 8 each have an upwardly cranked section 28 about half way along their lengths. The top arrow head portion has a pair of towbar brackets 30 welded symmetrically thereto and from these extend two converging arms 32 of the towbar proper. These are each made of an oblique section 34 and a horizontal section 36. Both horizontal sections 36 are welded to a trapezoidal draw bar plate 38 to which the hitch 40 is fixed. The arms 6, 8 and the towbar proper are made from steel angle. The converging arms 32 of the towbar proper tilt about a horizontal axis passing through brackets 30 at least to the position shown in broken lines in Figure 2.

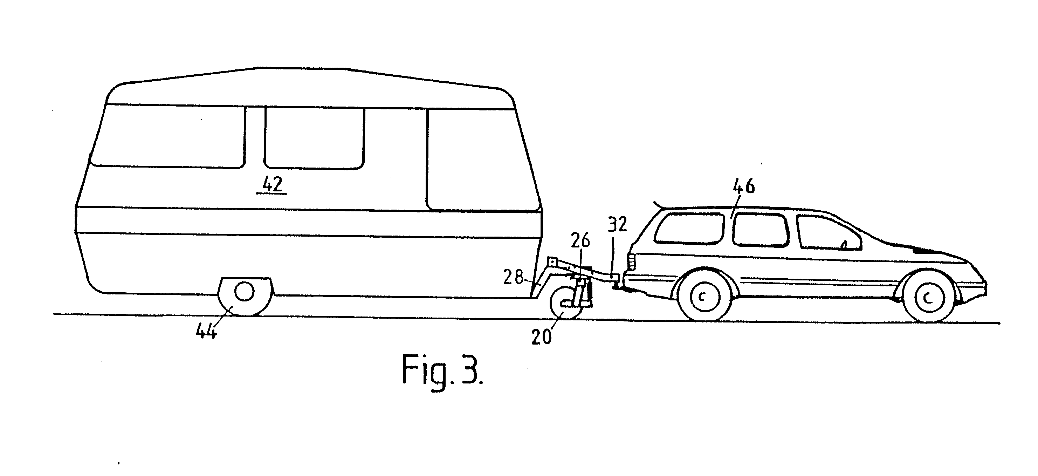

In Figure 3 a trailer in the form of caravan 42 with a single pair of road wheels 44 is shown towed by a car 46. This permits the driver to hitch and unhitch the trailer from the towing vehicle and to use the towbar as a lever with which to manoeuvre the trailer if desired. Importantly, the trailer is able to ride as a three wheel vehicle exerting no downward thrust upon the hitch other than part of the weight of the towbar. The trailer is free to pitch and sway independently of the towing vehicle. The towbar merely acts as a towing link which both articulates and rises and falls at the hitch. Accordingly the brackets 30 may be connected to either the trailer or the arms 6, 8.

While the castor wheel can be the same diameter as the road wheels for example thirteen inches, we prefer to utilise a castor wheel of the smaller diameter than the road wheels for example eight inches and to provide the castor wheel with suspension travel of the same length or nearly the same length as the road wheels so as to equalise the suspension characteristics of all three wheels as far as possible. In another version the castor wheel and part of the towbar are covered by a fairing.

We have found the advantages of the above embodiment to be:

1. A castor action which does not impair the steering of the towing vehicle.

2. 360 degree rotation of the castor wheel permits the caravan to be manoeuvred manually when unhitched.

3. The towbar proper is hinged, allowing easy hitch and unhitch.

4. The caravan wheels can be situated further to the rear, reducing overhang.

5. Restoration of the suspension of the towing vehicle.

6. Improved traction in front wheel drive vehicles.

7. Lower ground clearance is possible.


**Claims**

1. A road going vehicle trailer having a pair of road wheels, astor mounted road wheel assembly - (16, 18, 20) located forwardly of the road wheels toward the front of the trailer and a towbar (32) extending forwardly of the astor mounted wheel assmbly characterised in that one end of the towbar (32) is pivoted to the front of the trailer and the opposite end has a hitch (40) for connection to the towing vehicle.

2. A road going vehicle trailer as claimed in claim 1 characterised by a friction damper (26) operating between the castor mounted road wheel assembly (16, 18, 20) and the trailer wheel mounted (12) for the same.

3. A trailer as claimed in claim 1 or 2 characterised in that a wheel section (6, 8) is an extension of the trailer and carries the castor wheel assembly (16, 18, 20) and in that a hitching section (32) is pivotally connected to the wheel section and is capable of engaging the hitch of the towing vehicle.

4. A trailer as claimed in claim 3 characterised in that the castor wheel mount is located at the foremost end of the wheel section (6, 8) and the foremost end (28) is raised in relation to the remainder of the section sufficiently to accommodate a castor wheel (20) of the same order of size as the road wheels of the trailer.

5. A trailer as claimed in claim 4 characterised in that the wheeler section (6, 8) is cranked at an angle of from 62°-82° from the horizontal and the castor wheel (20) is separated from the cranked section sufficiently to permit the castor wheel to revolve through a steering arc when the trailer is unhitched.

6. A trailer as claimed in claim 3, 4 or 5 characterised in that the foremost end of the wheel section (6, 8) has a flat, horizontal, castor wheel mounted (12), the castor wheel assembly has a drop arm (16), the lower end of which carries a trailing arm (18) which supports the castor wheel, the upper end of which has a mounting flange and a damper disc (26) is imprisoned between the flange and the wheel mount.

7. A trailer as claimed in claim 6 characterised in that the drop arm (16) is inclined at 70-80° to the horizontal.

8. A trailer as claimed in any one of claims 3 to 7 characterised in that the wheel section comprises a pair of arms (6, 8) which converge forwardly of the trailer and the wheel mount and the hitching section comprises a pair of arms (32) which converge at the hitch (40) and are hinged to the wheel section between the wheel mount and the trailer whereby the hitching section acts as a lever for manoeuvering the trailer.

9. A trailer as claimed in any one of claims 1 to 8 characterised in that the castor wheel has a coil spring suspension (24) and optionally a shock absorber.

10. A trailer as claimed in any one of the preceding claims characterised in that the castor wheel (20) is attached to a single trailing arm (18) so as to be quickly detachable.

Fig.1.

Fig.2.

0 207 733

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 154 540 (J. RICHARD)<br><br>* Whole document; figure * | 1,3-5, 8-10 | B 62 D 63/06<br>B 60 D 1/14 |
| Y | | 2 | |
| Y,D | US-A-3 785 680 (A.L. GOOD et al.)<br>* Figures 1-3 * | 2 | |
| X | FR-A-1 148 607 (C.A. CHARLET)<br>* Abstract, point 1 * | 1,3 | |
| A | US-A-3 838 871 (E.A. SEIFERT, JR.)<br>* Figures 1,2 * | 1 | |
| A | FR-A-2 077 946 (A.A. CORBAULT)<br>* Claim 1; figures 1-3 * | 6,9 | TECHNICAL FIELDS SEARCHED (Int. Cl.4)<br>B 60 D 1/00<br>B 62 D 53/00<br>B 62 D 63/00 |
| A | US-A-4 295 659 (J. MERGEN)<br>* Claims 1,2; figures 1-3 * | 1,2,10 | |
| A | US-A-4 168 082 (R.T. HENDRICKSON)<br>* Figure 1 * | 6 | |
| | --- -/- | | |

The present search report has been drawn up for all claims

| Place of search | Date of completion of the search | Examiner |
|---|---|---|
| THE HAGUE | 26-09-1986 | SINGER G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication. where appropriate, of relevant passages | Relevant to claim | CLASSIFICATION OF THE APPLICATION (Int Cl 4) |
|---|---|---|---|
| A | US-A-3 197 238 (H.G. GODDARD) <br> * Claim 1; figures 1,2 * <br><br> ----- | 1 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 26-09-1986 | SINGER G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82